# EUROPÄISCHE PATENTSCHRIFT

(11) **EP 0 437 700 B1**
(45) Veröffentlichungstag und Bekanntmachung des Hinweises auf die Patenterteilung: **02.03.1994**
(21) Anmeldenummer: 90122029.3
(22) Anmeldetag: 17.11.1990
(51) Int. Cl.: B60R 16/02

(54) **Einrichtung zur Energieversorgung einer Heizscheibe aus dem Fahrzeugbordnetz**
Heated window power supply-arrangement from the onboard-vehicle energy supply network
Installation pour l'alimentation en énergie d'une vitre chauffante à partir du réseau de bord du véhicule

(30) Priorität: 22.12.1989 DE 3942593
(43) Veröffentlichungstag der Anmeldung: 24.07.1991
(73) Patentinhaber: ROBERT BOSCH GMBH, 70442 Stuttgart (DE)
(72) Erfinder: Wirtz, Rainer, Dipl.-Ing., W-7141 Unterriexingen (DE); Frey, Wunibald, W-7141 Schwieberdingen (DE); Renk, Ralph-Gebhard, Dipl.-Ing., W-6980 Wertheim (DE)

(56) Entgegenhaltungen:
- DE-A- 2 642 028
- DE-A- 3 743 316
- US-A- 3 899 730
- US-A- 3 968 342
- US-A- 4 357 524

## Beschreibung

### Stand der Technik

Die Erfindung geht aus von einer Einrichtung zur Energieversorgung einer Heizscheibe aus dem Fahrzeugbordnetz nach der Gattung des Anspruchs 1.

Zur Verbesserung der elektrischen Versorgung eines Heizwiderstandes, beispielsweise einer heizbaren Frontscheibe eines Kraftfahrzeugs sind verschiedene Möglichkeiten bekannt, die zur Erzielung einer möglichst hohen Heizleistung führen.

So ist aus der DE-OS 37 43 316 ein Fahrzeugbordnetzsystem bekannt, bei dem unter anderem auch eine heizbare Scheibe mit Energie versorgt werden soll. Dazu wird über einen Spannungswandler eine Wechselspannung mit einer Frequenz von 50 Hz und einer Maximalspannung von 80 V aus dem Spannungszwischenkreis ausgekoppelt und für die Heizung einer Scheibe verwendet. In diesem bekannten Fahrzeugbordnetzsystem werden jedoch keine Hinweise gegeben, der Heizspannung eine bestimmte Frequenz derart zuzuordnen, daß beispielsweise Störschutzbestimmungen sicher eingehalten werden.

Aus der US-PS 4 357 524 ist eine Steuereinrichtung für eine elektrische Scheibenheizung bei einem Flugzeug bekannt. Dabei wird in einem Generator eine Wechselspannung erzeugt, die in einem nachfolgenden Filter geglättet wird und dann der Steuerschaltung zugeführt wird. Vom Ausgang der Steuerschaltung wird die nochmals gefilterte Wechselspannung dem Heizwiderstand, der der Scheibe zugeordnet ist, zugeführt.

Ein Temperatursensor mißt die Temperatur der Scheibe und führt die aktuelle Temperatur dem Steuerkreis zu. In diesem wird die gemessene Temperatur mit einer Referenztemperatur verglichen, in Abhängigkeit vom Vergleichsergebnis wird der Versorgungsstrom für den Heizwiderstand von der Steuereinrichtung immer wieder völlig unterbrochen. Insgesamt entsteht dabei ein Wechselstrom bzw. eine Wechselspannung.

Aus der US-PS 3 899 730 ist eine weitere Scheibenheizung bekannt, bei der die Ausgangsspannung eines Drehstromgenerators direkt den Heizwiderständen zugeführt wird, wodurch Wandlungsverluste vermieden werden. Diese Wechselspannung kann jedoch in ihrer Frequenz überhaupt nicht beeinflußt werden, sie ist abhängig von den Bedingungen unter denen der Generator betrieben wird.

Die Erzeugung einer Wechselspannung aus einer Gleichspannung unter Verwendung eines Schwingkreises, beispielsweise eines Parallelschwingkreises ist aus der DE-OS 26 42 028 bekannt. Dabei wird zur Lieferung von Wechselstromleistung höherer Frequenzen die Gleichspannungsquelle über einen Schwingkreis an die Last angekoppelt, wobei zwischen die Gleichspannungsquelle und den Schwingkreis ein elektronisches Schaltelement, beispielsweise ein ein- und abschaltbarer Haltleiter geschaltet ist. Zu diesem Halbleiter-Schaltelement ist eine Induktivität in Serie geschaltet. Mit einem solchen Wechselstromgenerator, der auch als Resonanzkonverter bezeichnet wird, kann beispielsweise die induktive Erhitzung eines Widerstandes erreicht werden.

### Vorteile der Erfindung

Die erfindungsgemäße Einrichtung zur Energieversorgung einer Heizscheibe aus dem Fahrzeugbordnetz hat gegenüber den bekannten Scheibenheizungen den Vorteil, daß die Energieversorgung aus dem Bordnetz so erfolgt, daß an der Heizscheibe eine Wechselspannung bestimmter Frequenz anliegt, wobei die Auswahl dieser Frequenz so erfolgen kann, daß einerseits Polarisationseffekte in der Scheibe vermieden werden, und daß zur Einhaltung der bestehenden Störschutzbestimmungen der Oberwellenanteil dieser Spannung möglichst gering ist. Die Umsetzung der Bordnetzspannung erfolgt auch bei hoher Leistungsabgabe, also bis in den Kilowatt-Bereich, mit minimaler Verlustleistung.

Bei Bordnetzen, deren Spannung höher ist als in herkömmlichen Bordnetzen, beispielsweise 24 V oder 48 V ist eine weitere Verbesserung der erzielbaren Heizleistung möglich.

Durch die in den Unteransprüchen angegebenen Maßnahmen sind vorteilhafte Weiterbildungen und Verbesserungen der im Hauptanspruch angegebenen Einrichtung möglich.

### Zeichnung

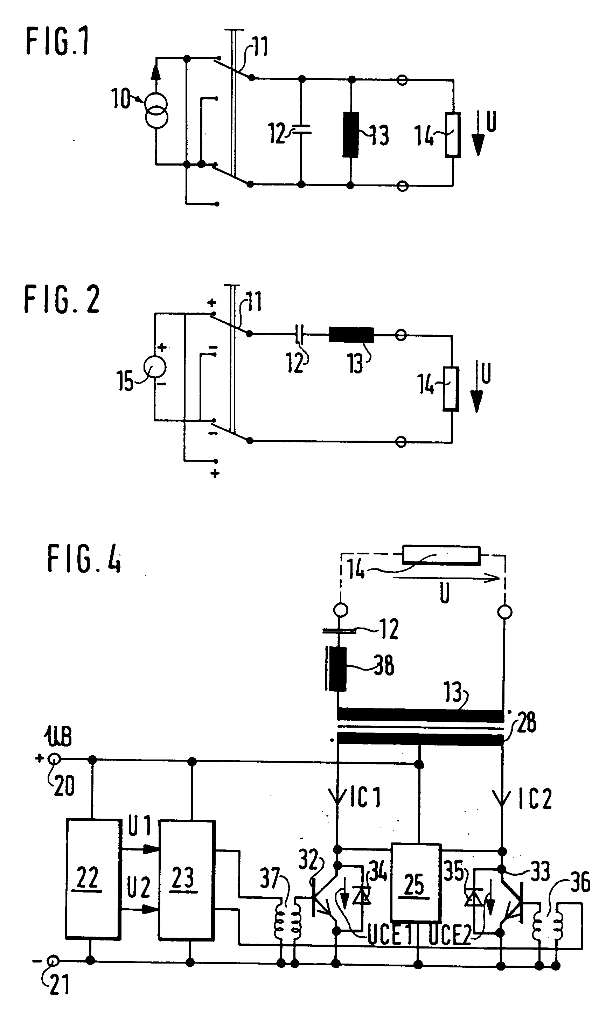

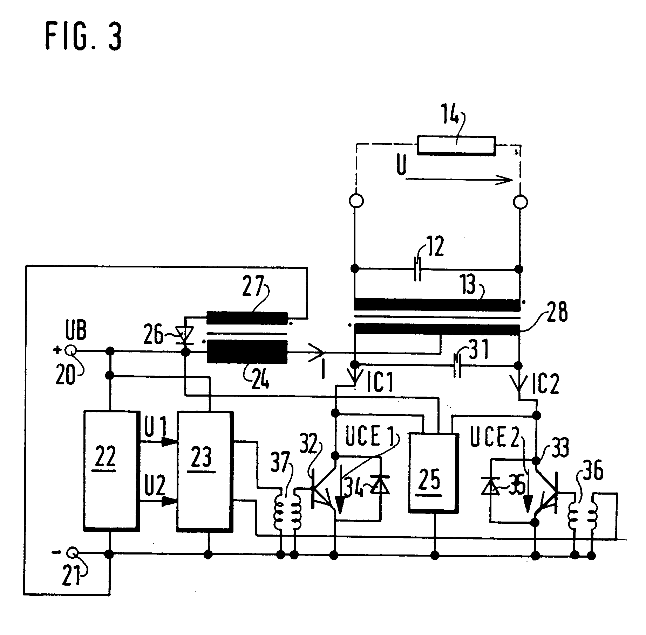

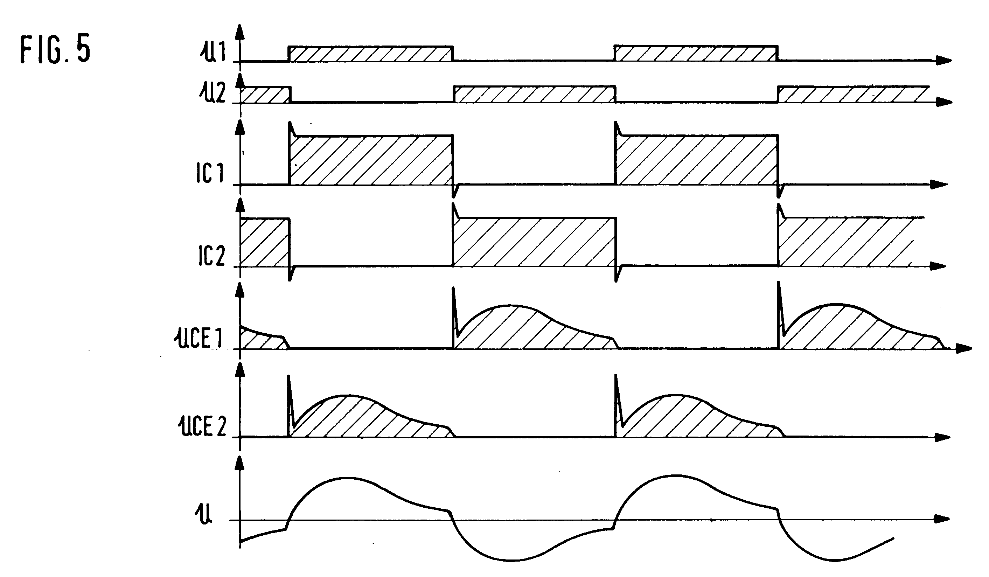

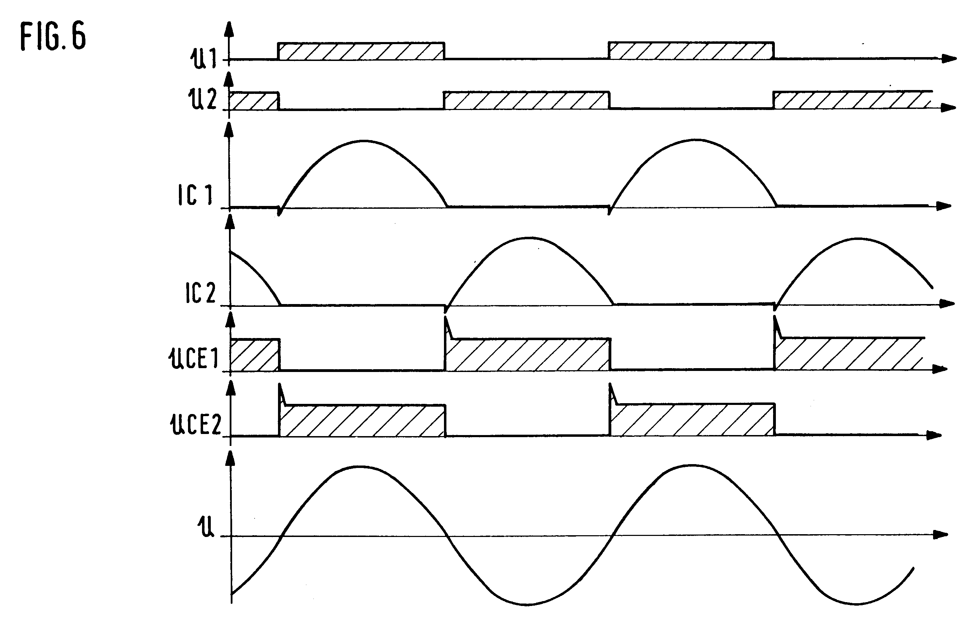

In Figur 1 ist das Prinzip des Resonanzkonverters für einen stromgesteuerten Parallelschwingkreis angegeben. In Figur 2 ist das selbe Prinzip des Resonanzkonverters für einen spannungsgesteuerten Serienschwingkreis angegeben, Figur 3 zeigt ein detailliertes Ausführungsbeispiels eines stromgesteuerten Parallelschwingkreises und Figur 4 zeigt ein detailliertes Ausführungsbeispiel eines spannungsgesteuerten Serienschwingkreises. In Figur 5 sind Spannungs- und Stromverläufe für den stromgesteuerten Parallelschwingkreis nach Figur 3 und in Figur 6 Spannungs- und Stromverläufe für den spannungsgesteuerten Serienschwingkreis nach Figur 4 dargestellt. Für gleiche Bauteile wurden in den einzelnen Figuren dort wo es sinnvoll erschien, gleiche Bezugszeichen verwendet.

### Beschreibung der Ausführungsbeispiele

In Figur 1 ist der prinzipielle Aufbau eines Parallelschwingkreises mit einer Stromquelle 10, einem Schalter 11 und dem aus einem Kondensator 12, einer Spule 13 und einem Widerstand 14 bestehenden Parallelschwingkreis dargestellt. Die Stromquelle 10 wird über den Schalter 11 im Takt der Resonanzfrequenz des Schwingkreises 12, 13, 14 auf den Schwingkreis geschaltet und entspricht daher einer getakteten Stromquelle, so daß am Widerstand 14, der den Verbraucher, also die Heizscheibe, darstellt unter der Voraussetzung einer ausreichenden Schwingkreisgüte eine sinusförmige Spannung U mit geringem Oberwellenanteil ansteht.

Bei dem in Figur 2 dargestellten Serienschwingkreis, der einen Kondensator 12, eine Spule 13 und einen Widerstand 14 umfaßt, wird über einen Leistungsschalter 11 eine Spannungsquelle 15 getaktet an den Serienschwingkreis angelegt. Dies bewirkt, daß eine rechteckförmige Spannung an den Schwingkreis angelegt wird, die bei ausreichender Schwingkreisgüte am Widerstand 14, der die Heizscheibe darstellt, zu einer sinusförmigen Spannung U mit geringem Oberwellenanteil führt.

In Figur 3 ist ein Ausführungsbeispiel für einen stromgesteuerten Parallelschwingkreis dargestellt. Dabei liegt die Bordnetzspannung + UB an Klemme 20, Klemme 21 liegt auf Masse. Zwischen den Klemmen 20 und 21 liegt die Steuerelektronik 22 und der Basistreiber 23. An die Klemme 20 ist weiterhin die primärseitige Spule 24 (Drossel), eine Schutzbeschaltung 25 sowie ggf. die Kathode einer Diode 26, deren Anode über eine Hilfswicklung 27 mit Masse verbunden ist, angeschlossen.

Die primärseitige Spule 24 ist mit der Mittenanzapfung der Primärwicklung des Übertragers 28 verbunden, dessen Sekundärwicklung die Spule 13 bzw. die Induktivität des Parallelschwingkreises, der außerdem einen Kondensator 12 und einen Widerstand 14 umfaßt, darstellt. Dabei stellt der Widerstand 14 den Lastwiderstand, also die Heizscheibe dar, an dem die oberwellenfreie Spannung U anliegen soll.

Parallel zur Primärwicklung des Übertragers 28 liegt dem Ausführungsbeispiel nach Figur 3 ein Kondensator 31, dessen eine Seite mit dem als Schalter wirkenden Leistungstransistor 32 und dessen andere Seite mit dem als Schalter wirkenden Leistungstransistor 33 verbunden ist. Parallel zur Kollektor-Emitterstrecke der beiden Transistoren 32 und 33 liegt je eine Diode 34, 35, dabei sind die Anoden der beiden Dioden mit den jeweiligen Emittern verbunden und liegen an Masse.

Zwischen der Basis des Transistors 33 und Masse liegt die Sekundärwicklung eines Übertragers 36, dessen Primärwicklung zwischen Masse und dem Basistreiber 23 liegt.

An die Basis des Transistors 32 ist die Sekundärwicklung eines Übertragers 37 angeschlossen, dessen andere Wicklung mit dem Basistreiber 23 verbunden ist.

Funktionsweise des stromgesteuerten Parallelschwingkreises nach Figur 3:
Die primärseitige Spule (Drossel) 24 bewirkt, daß dem Bordnetz, das die Spannung UB aufweist, ein eingeprägter Strom I entnommen wird, der mittels der Leistungstransistoren 32 und 33, die alternierend schalten, der Primärwicklung des im Gegentakt getriebenen Übertragers 28 zugeführt wird. Dabei wird der Übertrager 28 so ausgewählt, daß über sein Übersetzungsverhältnis die erforderliche Sekundärspannung und damit die gewünschte Verbraucherleistung eingestellt wird. Die Hauptinduktivität des Übertragers 28 wird als induktiver Anteil des RLC-Parallelschwingkreises verwendet, entsprechend Induktivität 13 nach Figur 1.

Die Leistungstransistoren 32 und 33, die als Leistungsschalter wirken, können als bipolar- oder MOS-Transistoren realisiert sein, wobei eine möglichst niedrige Flußspannung das maßgebliche Auswahlkriterium darstellt.

Dabei ist die Verwendung eines einstufigen Bipolartransistors mit transformatorisch über die beiden Übertrager 36 und 37 gekoppelten und damit leistungsangepaßten Basistreiber bei hohen Strömen eine besonders kostengünstige Lösung.

Falls eine Steuerung der abgegebenen Leistung erforderlich ist, muß die primärseitige Spule 24 mit einer Entmagnetisierungs-Hilfswicklung 27 verbunden werden, wobei zwischen die Spule 24 und die Hilfswicklung 27 eine Diode 26 gelegt wird.

Der Schwingkreiskondensator, der entsprechend der Prinzipschaltung nach Figur 1 das Bezugszeichen 12 trägt kann im Ausführungsbeispiel nach Figur 3 primärseitig, sekundärseitig oder verteilt auf die Primär- und Sekundärseite angebracht werden und somit an die vom Übersetzungsverhältnis des Übertragers 28 vorgegebenen Strom- und Spannungsverhältnissen angepaßt werden. Der Kondensator 12 stellt den sekundärseitigen und der Kondensator 31 den primärseitigen Anteil des gesamten Schwingkreiskondensators dar.

Die Schutzschaltung 25 nimmt die in der Übertrager-Streuinduktivität gespeicherte und beim Abschalten der Leistungstransistoren 32, 33 anfallende Energie auf und dient ferner zum Abbauen des in der Spule 24 fließenden Stromes I beim Abschalten des Geräts, sofern keine Steuerung der abgegebenen Leistung vorgesehen ist und somit die Diode 26 und die Hilfswicklung 27 nicht vorhanden sind. Die aufgenommene Abschaltenergie kann dann dem Hauptnetz wieder zugeführt werden.

Im Idealfall schalten die Transistoren 32 und 33 im Spannungs-Nulldurchgang, so daß minimale Schaltverluste auftreten.

Die Steuerelektronik 22 liefert die alternierenden Steuersignale U1 und U2, die von einem frei schwingenden Oszillator erzeugt werden. Der Stromflußwinkel der beiden Transistoren 32 und 33 beträgt 180°, wobei bei Betrieb ohne Diode 26 und Hilfswicklung 27 die Steuerelektronik 22 während der Kommutierung eine Überlappung der Ansteuersignale sicherstellen muß.

Bei Verwendung des zusätzlichen Stromzweigs mit Diode 26 und Hilfswicklung 27 kann eine Steuerung der abgegebenen Leistung von 0 bis zum Maximalwert durch die Vorgabe eines Stromflußwinkels kleiner als 180° erreicht werden. Während der Zeit tₐᵤₛ, in der die Transistoren 32 und 33 gleichzeitig sperren, wird über die Hilfswicklung 27 und die Diode 26 eine negative Spannungs-Zeit-Fläche der Größe UB x Tₐᵤₛ an die Spule 24 gelegt. Die Dioden 34 und 35 dienen zur Aufnahme des Inversstromes, der während der Kommutierung der Transistoren 32 und 33 anfällt. Bei Verwendung von MOS-Transistoren sind diese Dioden bereits im Leistungsbauelement vorhanden. Die beim Betrieb der Schaltungsanordnung nach Figur 3 anliegenden bzw. entstehenden Spannungen und Ströme sind in Figur 5 für einen stromgesteuerten Parallelschwingkreis mit einer Schwingkreisgüte von Q = 0,5 angegeben.

U1 und U2 sind zwei alternierend von der Steuerelektronik 22 abgegebene Rechteckspannungen. Sie bewirkten entweder im Transistor 32 eine nahezu rechteckförmigen Strom IC1 oder im Transistor 33 einen ebenfalls nahezu rechteckförmigen Strom IC2. Dadurch entstehen Kollektor-Emitterspannungen an den beiden Transistoren 32 und 33, die den in Figur 5 dargestellten Verlauf aufweisen. Die Ströme IC1 und IC2 bewirken, daß auf der Sekundärseite des Übertragers 28 die näherungsweise sinusförmige Spannung U entsteht, die letztendlich zur Versorgung des Widerstands 14, also der Scheibenheizung verwendet wird.

In Figur 4 ist das Ausführungsbeispiel einer Scheibenheizung mit einem spannungsgesteuerten Serienschwingkreis dargestellt. Dabei sind die Steuerelektronik 22, der Basistreiber 23 die Schutzschaltung 25 sowie die Transistoren 32 und 33 mit den zugehörigen Dioden 34 und 35 und die beiden Übertrager 36 und 37 in gleicher Weise an die Klemmen 20 und 21 angeschlossen wie im Ausfünrungsbeispiel nach Figur 3.

Weiterhin ist die Klemme 20, an der die positive Bordnetzspannung UB anliegt, direkt mit der Mittenanzapfung der Primärwicklung des Übertragers 28 verbunden. Die Sekundärwicklung des Übertragers 28 ist über die Reihenschaltung einer Induktivität bzw. Spule 38, eines Kondensators 12 und eines Widerstandes 14, der die Heizscheibe darstellt, verbunden, dabei bilden die Sekundärwicklung des Übertragers 28 und die Spule 38 die Gesamtinduktivität des Schwingkreises.

Bei diesem Ausführungsbeispiel wird die Bordnetzspannung UB direkt über die alternierend schaltenden Leistungstransistoren 32 und 33 an die Primärwicklung des im Gegentakt betriebenen Übertragers 28 gelegt. Das Übersetzungsverhältnis des Übertragers 28 ist so ausgelegt, daß am Verbraucher die zur Erzielung der gewünschten Leistung maximal erforderliche Ausgangsspannung U erreicht wird.

Die Funktion des Basistreibers 23 ist entsprechend der Funktion des Basistreibers 23 nach Figur 3.

Die Schutzschaltung 25 nimmt die in der Übertrager-Streuinduktivität bei Schaltvorgängen anfallende Energie auf und führt sie ganz oder teilweise wieder ins Bordnetz zurück.

Die abgegebene Leistung läßt sich durch eine Variation des Einschaltverhältnisses der Ansteuersignale U1 und U2 und damit des Stromflußwinkels der Leistungstransistoren 32 und 33 zwischen 0 und 180° stufenlos einstellen. Gegenüber der aus Figur 3 bekannten, für hohe Strombelastung auszulegenden Spule 24 ist in diesem Ausführungsbeispiel lediglich eine Spule 13 (Sekundärdrossel) kleiner Baugröße erforderlich.

Diesen Vorteilen steht jedoch eine schlechtere Stromausnützung der Leistungstransistoren 32, 33 gegenüber, da der Kollektorstrom die Form einer Sinus-Halbwelle hat und die Transistoren 32, 33 daher für den Spitzenwert dimensioniert werden müssen.

Bei maximaler Leistungsabgabe, d. h. der Stromflußwinkel beträgt pro Transistor 180°, schalten die Transistoren im Strom-Nulldurchgang, so daß minimale Schaltverluste auftreten und daher der Schaltungsaufwand für den Basistreiber 23 gering bleiben kann. Bei Stromflußwinkeln kleiner 180° kommutiert der Kollektorstrom auf die jeweils gegenüber liegende Diode 34, 35, die dann einer Inversdiode entspricht.

Die Strom- und Spannungsverhältnisse beim Ausführungsbeispiel nach Figur 4 sind in Figur 6 angegeben.

Die Steuerelektronik 22 liefert wiederum zwei gegenphasige Spannungsrechteckimpulse U1 und U2, die die dem Basistreiber 23 zugeführt werden. Solange die Spannung U1 einen Wert größer als 0 aufweist, fließt ein Kollektorstrom IC1 durch den Transistor 32 und verursacht eine Rechteckspannung UCE1. Ist dagegen die Spannung U2 größer gleich 0, fließt durch den Transistor 33 ein pulsförmiger Strom IC2 und bewirkt eine rechteckförmige Spannung UCE1.

Auf der Sekundärseite des Übertragers 28 entsteht daher eine rechteckförmige Spannung, der Oberschwingungsanteil dieser Rechteckspannung wird durch die Filterwirkung des Serienschwingkreises L38, C39 von der Last 14 ferngehalten, so daß an dieser eine weitgehend sinusförmige Spannung anliegt, die im Widerstand 14, also der Heizscheibe zu Heizzwecken verwendet wird. Diese Spannung ist in Figur 6 für einen spannungsgesteuerten Serienschwingkreis mit einer Schwingkreisgüte Q = 2 angegeben.

Zur Versorgung der Scheibenheizung wird das Prinzip des Resonanzkonverters in beiden Ausführungsbeispielen so ausgeführt, daß bei einer gewünschten Leistungsabgabe bis zu 1,5 Kilowatt eine minimale Verlustleistung anfällt und noch bei einer minimalen Bordnetzspannung von UB = 10 V ein Wirkungsgrad größer 80 % erreicht wird. Dies wird erreicht, indem der Übertrager im Gegentaktbetrieb zur vollen Ausnutzung der zur Verfügung stehenden Bordnetzspannung betrieben wird und Leistungstransistoren mit niederer Flußspannung verwendet werden, beispielsweise Parallelschaltungen von MOS-Transistoren oder Bipolar-Transistoren mit transformatorisch gekoppeltem Basistreiber.

Bei der Dimensionierung des RLC-Schwingkreises ist zu beachten, daß er eine solche Güte aufweist, daß sich am Verbraucher, also an der Heizscheibe eine sinusförmige Spannung mit geringem Oberwellenanteil einstellt, so daß die bestehenden Störschutzvorschriften erfüllt werden.

Üblicherweise wird die erfindungsgemäße Einrichtung in Bordnetzen mit einer Bordnetzspannung UB von etwa 12 V eingesetzt. Aus der Heizscheibe, deren Widerstand im Bereich von einigen Ohm liegt, sollte sich eine Spannung von ca. 20 - 100 V einstellen, damit die erforderliche Heizleistung entsteht. Die Frequenz der an der Scheibe anliegenden Spannung ist in relativ weitem Bereich wählbar, sie kann beispielsweise einige KHz betragen oder aber, um ausserhalb des Hörbereichs zu gelangen z. B. 50 KHz betragen. Grundsätzlich kann die Höhe und die Frequenz der Heizspannung an Erfordernisse angepaßt werden.

Beim Betrieb der erfindungsgemäßen Einrichtung an Bordnetzen mit höherer Spannung, beispielsweise 24 oder 48 V erhält man bei nahezu gleichen Verlusten eine entsprechende Vervielfachung der Abgabeleistung, die im Widerstand 14, also der Heizscheibe zur Verfügung steht.

## Patentansprüche

1. Einrichtung zur Energieversorgung einer Heizscheibe aus dem Fahrzeugbordnetz, bei der die Bordnetzspannung in eine Wechselspannung umgewandelt wird, die an die Heizscheibe angelegt wird, dadurch gekennzeichnet, daß die Heizscheibe Bestandteil eines Schwingkreises ist und die Frequenz der Wechselspannung der Resonanzfrequenz des Schwingkreises entspricht und eine Frequenz gewählt wird, bei der keine Polarisationseffekte in der Scheibe auftreten.

2. Einrichtung nach Anspruch 1, dadurch gekennzeichnet, daß der Schwingkreis ein Parallelschwingkreis ist und die Heizscheibe den ohmschen Anteil einer Kombination aus Widerstand, Spule und Kondensator darstellt.

3. Einrichtung nach Anspruch 1, dadurch gekennzeichnet, daß der Schwingkreis ein Serienschwingkreis ist und die Heizscheibe den ohmschen Anteil einer Kombination aus Widerstand, Spule und Kondensator darstellt.

4. Einrichtung nach einem der vorhergehenden Ansprüche, dadurch gekennzeichnet, daß die Güte des Schwingkreises so festgelegt wird, daß an der Heizscheibe eine sinusförmige Spannung mit geringem Oberwellenanteil anliegt.

5. Einrichtung nach einem der vorhergehenden Ansprüche dadurch gekennzeichnet, daß die Erzeugung der Wechselspannung aus der Bordnetzspannung mit einem Resonanzkonverter durchgeführt wird, der eine Steuerelektronik enthält, die alternierende Steuersignale (U1, U2) erzeugt, die über einen Basistreiber (23) Schalttransistoren (32, 33,) umschaltet.

6. Einrichtung nach einem der vorhergehenden Ansprüche, dadurch gekennzeichnet, daß eine Schutzschaltung (25) vorgesehen ist, die die beim Abschalten der Transistoren (32, 33) anfallende Energie aufnimmt und dem Bordnetz wieder zuführt.

## Claims

1. Device for supplying energy to a heated window from the vehicle electrical system, in which device the voltage of the vehicle electrical system is converted into an alternating voltage which is applied to the heated window, characterized in that the heated window is a component of an oscillating circuit and the frequency of the alternating voltage corresponds to the resonance frequency of the oscillating circuit, and a frequency is selected at which polarization effects do not occur in the window.

2. Device according to Claim 1, characterized in that the oscillating circuit is a parallel oscillating circuit, and the heated window constitutes the ohmic portion of a combination of resistor, coil and capacitor.

3. Device according to Claim 1, characterized in that the oscillating circuit is a series oscillating circuit, and the heated window constitutes the ohmic portion of a combination of resistor, coil and capacitor.

4. Device according to one of the preceding claims, characterized in that the quality of the oscillating circuit is determined such that a sinusoidal voltage with a small harmonic content is applied to the heated window.

5. Device according to one of the preceding claims, characterized in that the production of the alternating voltage from the voltage of the vehicle's electrical system is carried out with a resonance converter which contains control electronics which produce alternating control signals (U1, U2) which switch switching transistors (32, 33) via a base driver (23).

6. Device according to one of the preceding claims, characterized in that a protective circuit (25) is provided which absorbs the energy produced when the transistors (32, 33) are switched off and feeds it back again to the vehicle's electrical system.

## Revendications

1. Installation d'alimentation en énergie d'une vitre chauffante à partir du réseau de bord d'un véhicule, dans laquelle la tension de bord est transformée en une tension alternative appliquée à la vitre chauffante, caractérisée en ce que la vitre chauffante est un composant d'un circuit oscillant à la fréquence de résonance duquel correspond la fréquence de la tension alternative, cette fréquence étant choisie de manière à éviter tout effet de polarisation dans la vitre.

2. Installation selon la revendication 1, caractérisée en ce que le circuit oscillant est un circuit en parallèle et que la vitre chauffante est la partie ohmique d'un ensemble constitué d'une résistance, d'une bobine et d'un condensateur.

3. Installation selon la revendication 1, caractérisée en ce que le circuit oscillant est un circuit en série et que la vitre chauffante est la partie ohmique d'un ensemble constitué d'une résistance, d'une bobine et d'un condensateur.

4. Installation selon l'une des revendications précédentes, caractérisée en ce que le facteur de qualité du circuit oscillant est déterminé de manière à délivrer à la vitre chauffante une tension sinusoïdale présentant peu d'harmoniques.

5. Installation selon une des revendications précédentes, caractérisée en ce que la tension alternative est fournie, à partir de la tension de réseau de bord, par un convertisseur de résonance comprenant une électronique de pilotage fournissant en alternance des signaux de pilotage (U1, U2) qui commandent des transistors de commutation (32, 33) par l'intermédiaire d'un driver de base (23).

6. Installation selon l'une des revendications précédentes, caractérisée en ce qu'il est prévu un circuit de protection (25) qui reçoit l'énergie résultant de la coupure des transistors (32, 33) et la renvoie au réseau de bord.
